# EUROPEAN PATENT APPLICATION

(11) **EP 1 396 807 A2**
(43) Date of publication of application: **10.03.2004**
(21) Application number: 03005451.4
(22) Date of filing: 14.03.2003
(51) Int. Cl.: G06F 17/60

(54) **Advertisement delivering equipment and method, information receiving terminal and method, server and server's information providing method**

(30) Priority: 30.08.2002 JP 2002253525
(71) Applicant: Hitachi, Ltd., Chiyoda-ku, Tokyo 101-8010 (JP)
(72) Inventor: Kawamata, Yukihiro, Hitachi-shi, Ibaraki 319-1225 (JP); Yamaashi, Kimiya, Hitachi-shi, Ibaraki 316-0005 (JP); Ishida, Takaharu, Hitachinaka-shi, Ibaraki 312-0052 (JP); Tomobe, Osamu, Hitachi-shi, Ibaraki, 316-0022 (JP)
(74) Representative: Beetz & Partner Patentanwälte

(57) **Abstract**

In order to provide an advertisement delivering system that can deliver advertisement information together with detailed advertisement information and current vehicle positional information, the advertising center (1) adds associated information such as map information (latitude and longitude) and URL or portal site information that the information provider has to AD information. With this, the advertising center can utilize AD information more effectively. Consequently, the system can expect more information receivers and providers and expansion of the AD business.

## Description

### BACKGROUND OF THE PRESENT INVENTION

The present invention relates generally to advertisement delivering equipment, information receiving terminal, server, advertisement delivering method, information receiving method and server's information providing method for advertisement (hereinafter abbreviated as AD) together with related information such as positional information and portal site.

Conventionally, an advertising center collects AD information from advertisers of shops and facilities and delivers it to personal computers and cellular phones through Internet. As cellular phones and PHSs (personal handy-phone systems) have been in widespread use, information receivers use these to request the advertising center to deliver AD information and download the information directly or by mail. Recent AD delivering systems have used these cellular phones and PHSs so that their users may access AD information anywhere and anytime.

However, the conventional advertising centers cannot deliver advertiser's information such as a map of advertiser's shops or facilities to the information receivers although they deliver AD messages. Similarly, information receivers who are on vehicles cannot receive such advertiser's information. The conventional advertising centers have not been ready to add advertiser's associated information such as details or portal information to the advertiser's AD information. Similarly, the information receivers cannot receive such detail information. They receive AD messages only. This makes AD less effective.

### SUMMARY OF THE PRESENT INVENTION

The main object of the present invention is to solve the above problems and particularly to present an AD delivering system and method to deliver AD information of an advertiser who is in a local area through which a vehicle (or an information receiving terminal) runs together with associated information such as advertiser's local map information.

### [Means for Solving the problems]

To solve the above problems, the AD delivering system of the present invention comprises AD delivering equipment, an information receiving terminal, and a server that presents AD associated information. The AD delivering equipment is connected to a server, an advertiser's information transmitting terminal via communication networks, and an information-receiving terminal on a vehicle having an image display block that can display a local road map including the current vehicle position.

The AD delivering equipment comprises:
a receiving block (for an advertiser) for receiving advertiser's AD information, promotion information and other information from an advertiser's information transmitting terminal,
a receiving block (for an information provider) for receiving AD information, promotion information and other information of an advertiser from a server,
an AD information creating block for creating AD information to be sent to the information receiving block (of a information receiving terminal on a vehicle) according to AD information from an information transmitting terminal and AD information from a server, and
an AD information displaying and executing block for transmitting AD information that was created by the AD information creating block to the information receiving terminal (of a vehicle) and for executing visual display of the AD information on an image display block in the information receiving terminal.

The AD information sent from the information transmitting terminal means information advertising advertiser's features such as low prices, high-quality of goods, availability, convenience, and so on. Contrarily, the AD information sent from the server means information describing specifications and appearances of goods, URL or portal site identifier of the information provider. The AD information-creating block adds associated information such as map information (latitude and longitude) and advertiser's URL to AD information sent from the advertiser (shop, facility, etc.). The AD information displaying and executing block transmits the resulting information to the information-receiving terminal.

The information-receiving terminal comprises an image display block which is connected, via a mobile network, to the AD delivering equipment connected to both an advertiser's information transmitting terminal (via a mobile network) and a server containing an advertiser's web site (via a communication network), and which can display a local road map containing the current position of a vehicle which is connected to the server via a mobile network, and
a receiving block which receives, from the AD delivering equipment, AD information which the AD delivering equipment created from advertiser's AD information, promotion information and other information from an information transmitting terminal and those from the server.

Further, the information receiving terminal an input block for entering reservation, purchase, and other request information in response to the received AD information and
a transmitter block for transmitting the entered request information to at least one of the advertiser's information transmitting terminal and the advertiser's web site.

With this, the information receiver who is a passenger on a vehicle can receive AD information in the area through which the vehicle runs. Further, the information receiver can receive details of the AD information or associated information such as advertiser portal information.

The server comprises two blocks:
a transmitting block (to an advertiser) which is connected to the AD delivering equipment connected to both an advertiser's information transmitting terminal (via a communication network) and an information receiving terminal (via a mobile network) which is equipped with an image display block capable of displaying a local road map through which a vehicle runs and which transmits advertiser's AD information, promotion information, and other AD information to the AD delivering equipment associated with a web site of an advertiser which is connected to the information receiving terminal via a mobile network, and
a receiving block (from a passenger of a vehicle) which receives reservation, purchase, and other request information that the passenger made in response to AD information which the AD delivering equipment created from advertiser's AD information, promotion information and other information sent from an information transmitting terminal and those from the server.

With this, the advertising center can widely deliver advertiser's information together with associated information and the information receivers can receive AD information together with details (associated information) of the AD information.

### BRIEF DESCRIPTION OF THE DRAWINGS

Fig. 1 shows the configuration of the AD delivering system.
Fig. 2 is a functional block diagram of AD delivering equipment, information receiving terminal, and information provider server.
Fig. 3 shows respective steps of the AD delivering equipment, the information receiving terminal, and the information provider server.
Fig. 4 shows an example of an AD delivering equipment which is an embodiment of the present invention.
Fig. 5 shows sample login and authentication screens.
Fig. 6 shows a sample menu screen.
Fig. 7 shows a sample Flash CM creation screen.
Fig. 8 shows sample Billing Check and Billing screens (without selection of Daily CM).
Fig. 9 shows a sample Billing Check screen (with Daily CM selected).
Fig. 10 shows a sample Registration Of Daily CM Period screen.
Fig. 11 shows sample Billing Check and Billing screens.
Fig. 12 shows a sample Daily CM Creation screen.
Fig. 13 shows a sample Schedule Management screen.
Fig. 14 shows a sample Daily CM Edit/Delete CM Pattern 2 screen.
Fig. 15 shows a sample local road map including positional information of advertisers and information receivers.
Fig. 16 shows sample screens explaining how the About Shop *** is displayed.
Fig. 17 shows sample screens explaining how a portal site is selected.
Fig. 18 shows a sample reservation screen displayed when the URL pointed to by the selected portal site is selected.
Fig. 19 shows a sample reservation screen displayed by a portal site of the specified portal site identifier.
Fig. 20 is shows operating steps of the AD delivering system that is an embodiment of the present invention.

### DETAILEED DESCRIPTION OF THE PREFERRED EMBODIMENTS

Preferred embodiments of the present invention are described below with reference to the accompanying drawings.

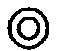 AD delivering system

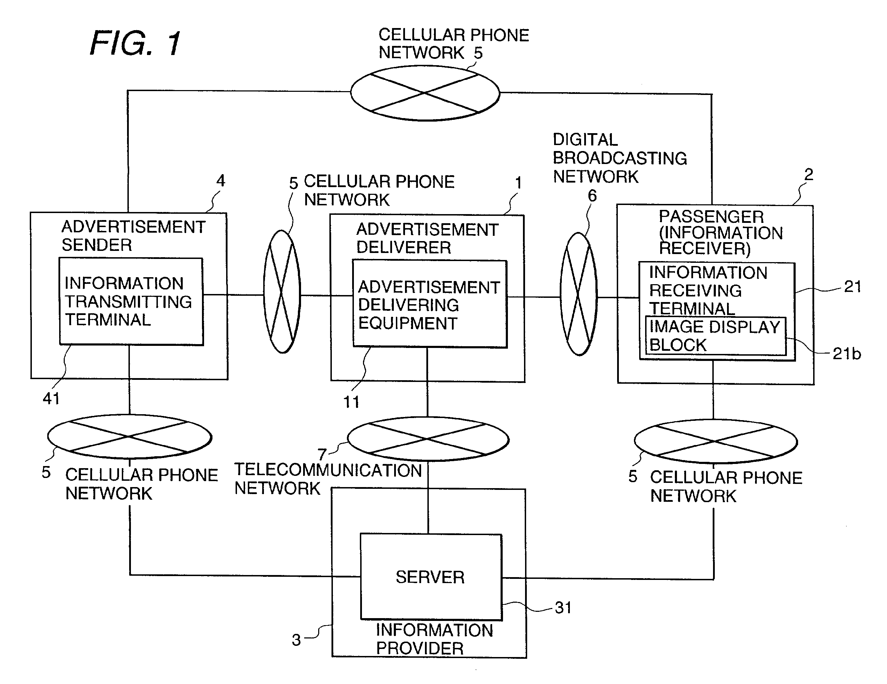

Fig. 1 is a functional block diagram of configuration of an AD delivering system in accordance with the present invention.

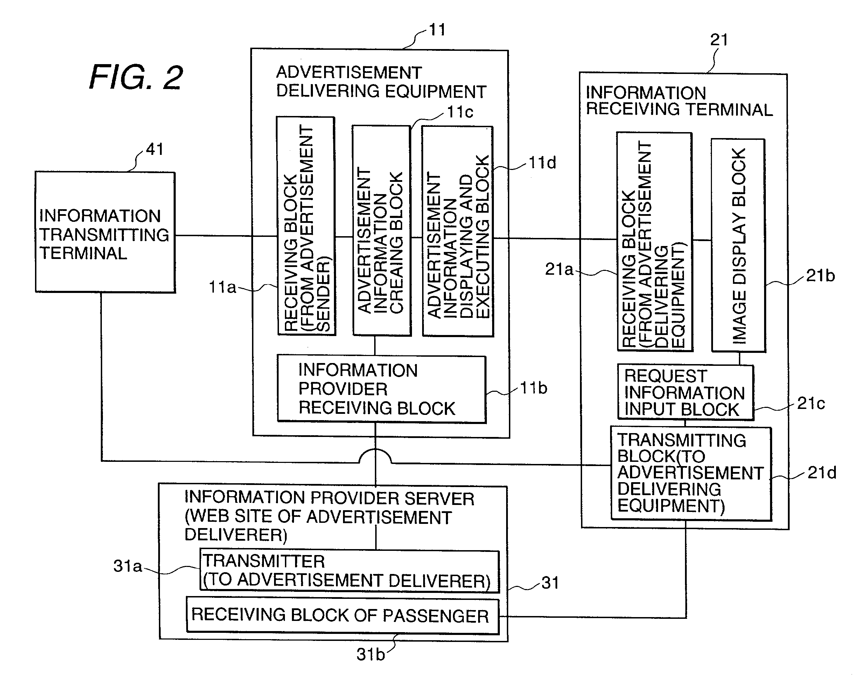

Fig. 2 is a functional block diagram of AD delivering equipment 11, information receiving terminal 21, and information provider server 31 of an embodiment of the present invention.

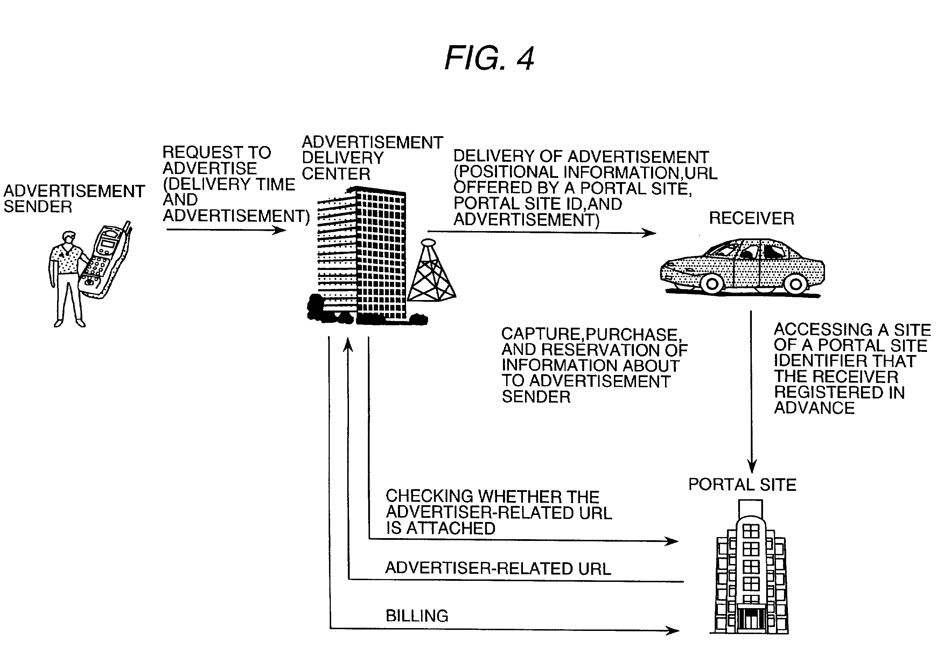

Substantially, advertiser 1, information receiver 2, server 31 of the information provider can be respectively an advertising center, a passenger on vehicle, and a portal site (in that order) as shown in Fig. 4. In this embodiment, the information receiver who is an information receiver 2 uses a portal site identifier that has been registered in advance to an AD receiving terminal that is the information receiver 2 to access a portal site. The portal site identifier indicates a registered portal site to which the AD receiving terminal is linked and is used to access the portal site to get AD information.

Below will be explained the advertiser 1, information receiver 2, server 31 of the information provider that constitute the AD delivering system in that order.

### [AD delivering equipment 11]

Referring to Fig. 1, the AD delivering equipment 11 is so designed to be connected to information transmitting terminal 41 of advertiser 4 via a mobile network 5 and server 31 of the information provider via telecommunication network 7.

Further, the AD delivering equipment 11 is connected, via a digital broadcasting network 6, to an information-receiving terminal 21 of a person 2 on a vehicle which is equipped with an image display block 21b that can display a local road map including the current position of the vehicle. The digital broadcasting network 6 is a push-button type information transmission means for information receivers.

Referring to Fig. 2, the AD delivering equipment 11 is so constructed as to contain information receiving block 11a (for the advertiser), information receiving block 11b (for the information provider), AD information creating block 11c, and AD information displaying and executing block 11d.

The AD delivering equipment 11 comprises a central processing unit, a main storage unit, an I/O control unit, I/O units, and a mobile network telecommunication unit (which are not visible here). Further, the AD delivering equipment 11 contains databases (DBs) for advertisement texts (CM). AD delivery schedule management, information expiration time management, telephone numbers, and accounting management that are required for AD delivery. (These are not visible here.)

Further, the AD delivering equipment 11 has programs to accomplish the above functions installed in the main or external storage unit. The programs run any time when necessary. Some of these programs cause the AD delivering equipment 11 to work as the information receiving block 11a (for the advertiser), the information receiving block 11b (for the information provider), the AD information-creating block 11c, and the AD information displaying and executing block 11d.

As shown in Fig. 1 and Fig. 4, the AD delivering equipment 11 that is an embodiment of the present invention receives advertisement data (CM) and AD requests such as AD delivery times and periods at the information receiving block 11a (for the advertiser).

The AD information displaying and executing block 11d of the AD delivering equipment 11 transmits advertisements (AD) together with positional information, URL presented by the portal site, and a portal site identifier to the information receiving terminal 21 on a vehicle via the digital broadcasting network 6.

Further, the AD delivering equipment 11 has a function to cause the information receiving block 11b (for the information provider) to receive AD information including advertiser-associated URLs from the portal site. The advertising center can charge advertisements to the portal site.
Below will be explained each component of the AD delivering equipment 11.

### (1) Information receiving block 11a (for the advertiser)

This block 11a receives AD information, promotion information, and other information of the advertiser 4 from the information-transmitting terminal 41.

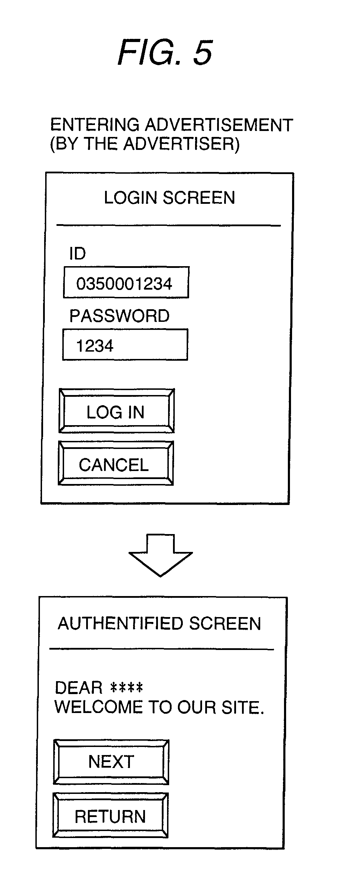

As shown in Fig. 5, the information receiving block 11a (for the advertiser) of the embodiment of the present invention has a function of displaying a login screen of the advertiser 4, receiving login information from the advertiser 4, and displaying an "Authentified" screen when the advertiser 4 logs in correctly.

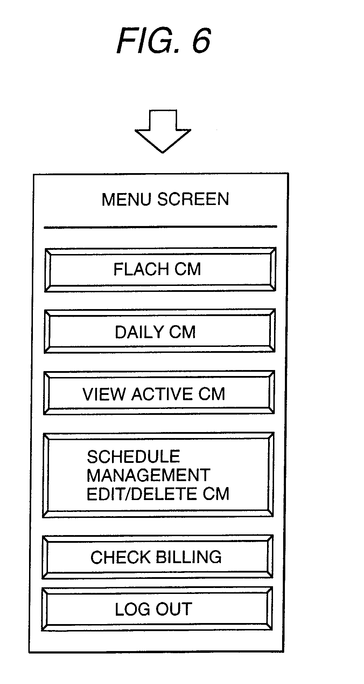

When the advertiser selects the "Next" button on the "Authentified" screen, the information receiving block 11a receives its signal, outputs a menu screen, and receives selection information from the menu screen. (See Fig. 6.)

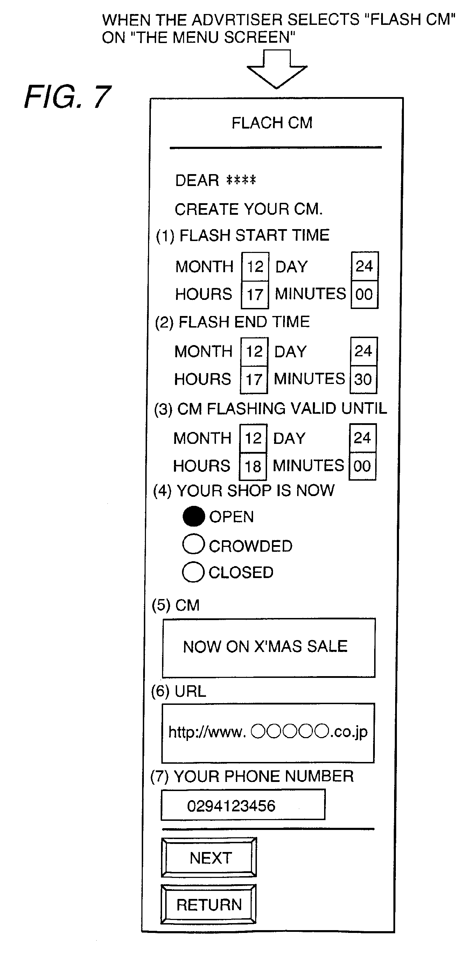

The information receiving block 11a has a function of outputting a "Create Flash CM" screen on which the advertiser can set a content of a flash advertisement (e.g. Flash start time, Flash end time, and Comment) when the advertiser 4 selects "Flash CM" on the menu screen, and receiving the content of a flash advertisement that the advertiser 4 typed in. (See Fig. 7.)

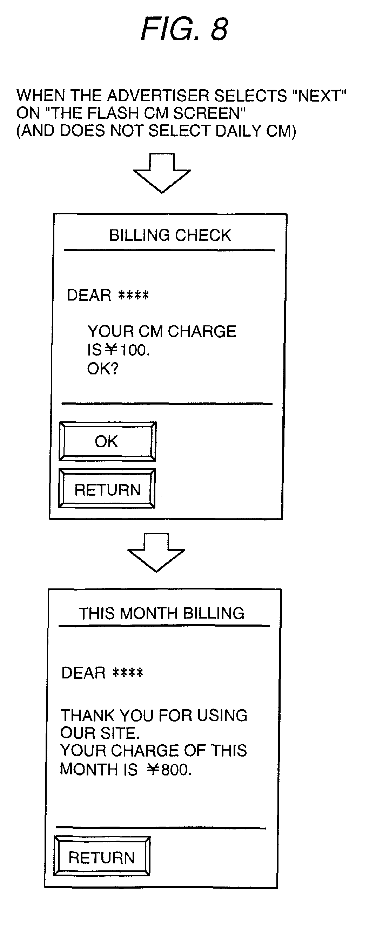

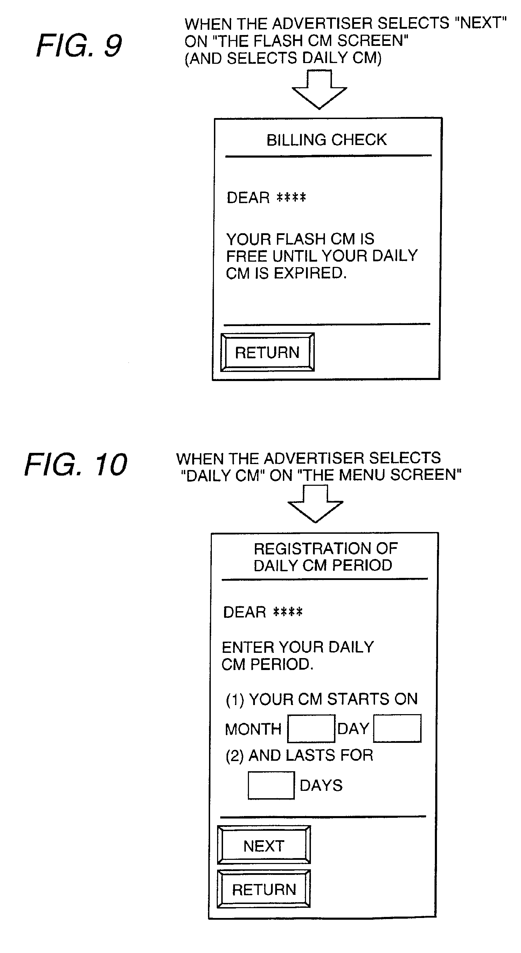

When the advertiser 4 selects "Next" on the "Create Flash CM" screen, the information receiving block 11a can output a "Billing Check" screen. If the advertiser 4 has not selected "Daily CM," each flash CM is charged to the advertiser. (See Fig. 8.) If the advertiser 4 has selected "Daily CM," the flash CM can be charged free. (See Fig. 9.)

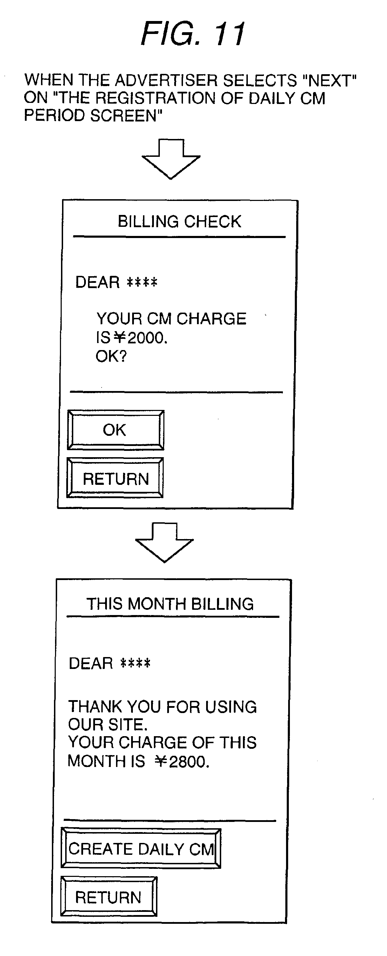

The information receiving block 11a has a function of receiving "Daily CM" when the advertiser 4 selects "Daily CM" on the menu screen and displaying the "Registration of Daily CM Period" screen on which the advertiser 4 can enter a period of advertisement ("Your CM starts on Month[ ] Day[ ]" and "lasts for [ ] days"). When the advertiser 4 selects "Next" on this screen, the information receiving block 11a outputs the "Billing check" screen. (See Fig. 10 and Fig. 11.)

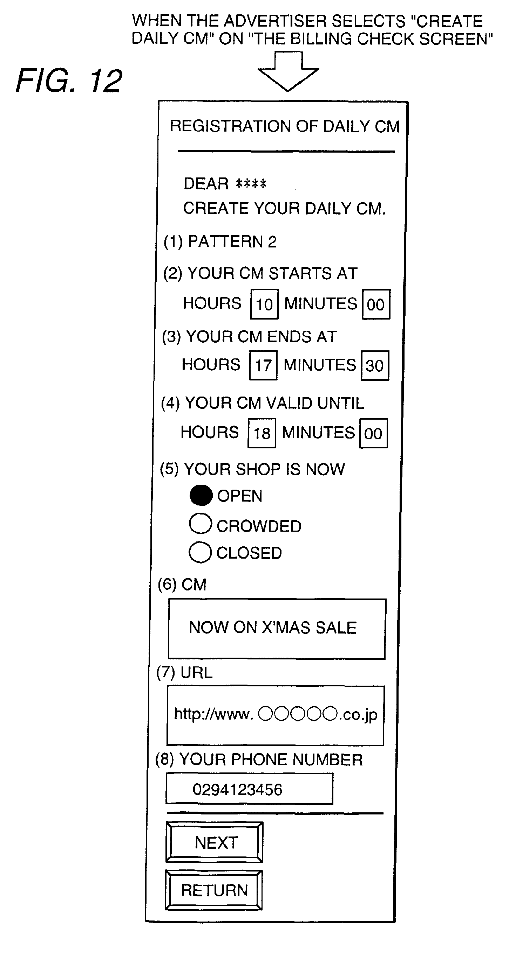

Further, when the advertiser 4 selects "Create Daily CM" on the "Billing Check" screen, the information receiving block 11a outputs the "Registration of Daily CM" screen on which the advertiser 4 can enter the content of a daily advertisement (CM). The information receiving block 11a can get information of the advertisement start time, advertisement end time, shop/facility condition, content of advertisement, advertiser's URL, and phone number from this screen. (See Fig. 12.)

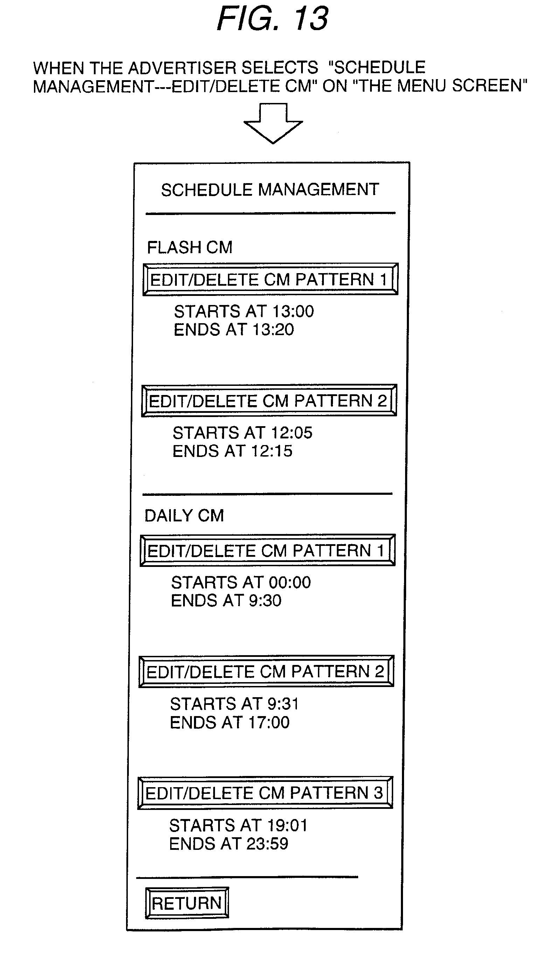

The information receiving block 11a also has a "CM Check" screen to check an advertisement in delivery and a "Schedule Management" screen for schedule management of advertisements. (See Fig. 13.)

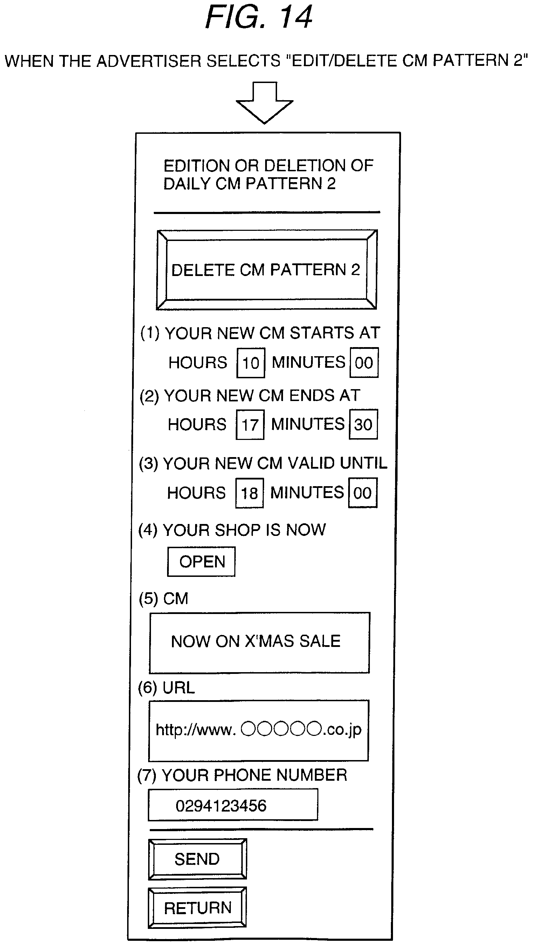

The information receiving block 11a also has a function of transferring information to the AD information creating block 11c to edit or delete a flash or daily CM pattern when "Edit/Delete Flash CM" or "Edit/Delete Daily CM" is selected on the "Schedule Management" screen. (See Fig. 14.) In other words, the information receiving block 11a has both a function of receiving AD information from the advertiser's information transmitting terminal 41 and a function of transferring information related to creation of advertisements to the AD information creating block 11c.

Naturally, the information receiving block 11a receives log-out information although it is not illustrated.

### (2) Information receiving block 11b (for the information provider)

This block 11b functions to receive AD information, promotion information, and other AD information of advertiser 4 from the information provider server 31.

In the embodiment of the present invention, the information receiving block 11b (for the information provider) functions to receive, from the portal site, a portal site identifier and an advertiser-related URL which is part of information sent from the server.

The information receiving block 11b functions to transfer the URL and the portal site identifier to the AD information creating block 11c to add these to the advertisement information coming from the advertiser 4.

### (3) AD information creating block 11c

This block 11c functions to create AD information from AD information sent from the information transmitting terminal and AD information sent from the server.

As shown in Fig. 7, in the embodiment of the present invention, the AD information creating block 11c receives advertisement-related information such as advertisement start time, advertisement end time, shop/facility condition, content of advertisement, advertiser's URL, and phone number from the "Create Flash CM" screen via the information receiving block 11a and creates AD information.

Further, the AD information creating block 11c can also create AD information from information (such as content of an advertisement) set on the "Create Daily CM" screen. (See Fig. 12.)

Furthermore, the AD information creating block 11c can also create AD information from information (such as content of an advertisement) set on the "Edit/Delete CM Pattern" screen. (See Fig. 14.)

Furthermore, the AD information creating block 11c receives advertiser-associated URL and a portal site identifier from the portal site through the information receiving block 11b (for the information provider) and adds to an advertisement (CM).

### (4) AD information displaying and executing block 11d

The AD information displaying and executing blocklld functions to transmit AD information created by the AD information creating block 11c to the information receiving terminal 21 and to execute visual display of AD information on the image display block 21b in the information receiving terminal 21.

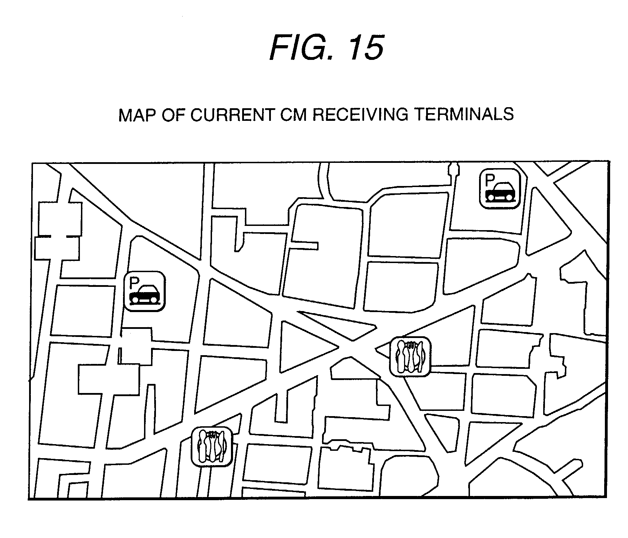

As shown in Fig. 15, in the embodiment of the present invention, AD information displaying and executing block 11d sends positional information and a local map of an advertisement receiving terminal which is an information receiving terminal 21 to the image display block 21b.

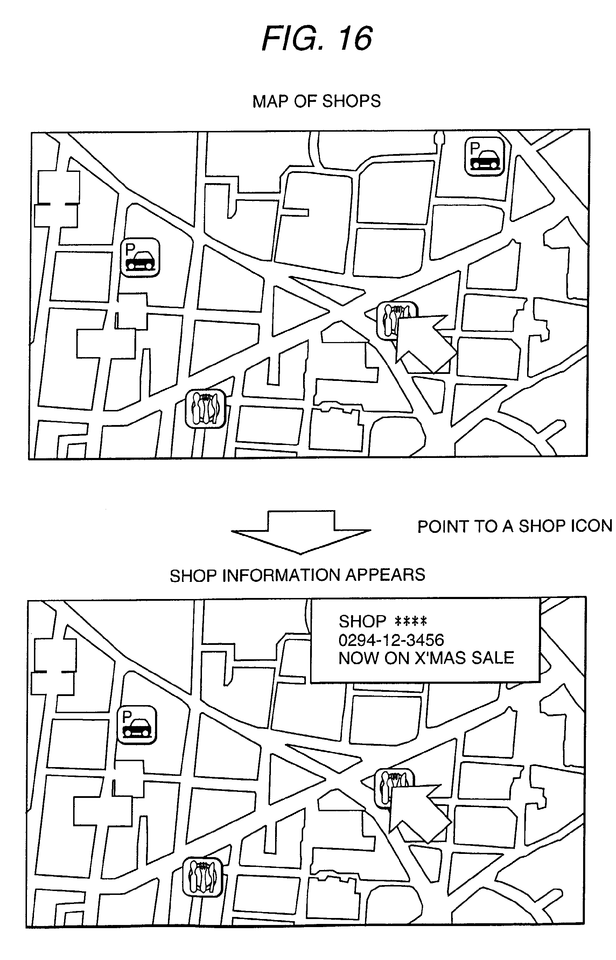

The AD information displaying and executing block 11d also has a function to transmit AD information ("Map of *** shops") created by the AD information creating block 11c to the information-receiving terminal. (See Fig. 16.)

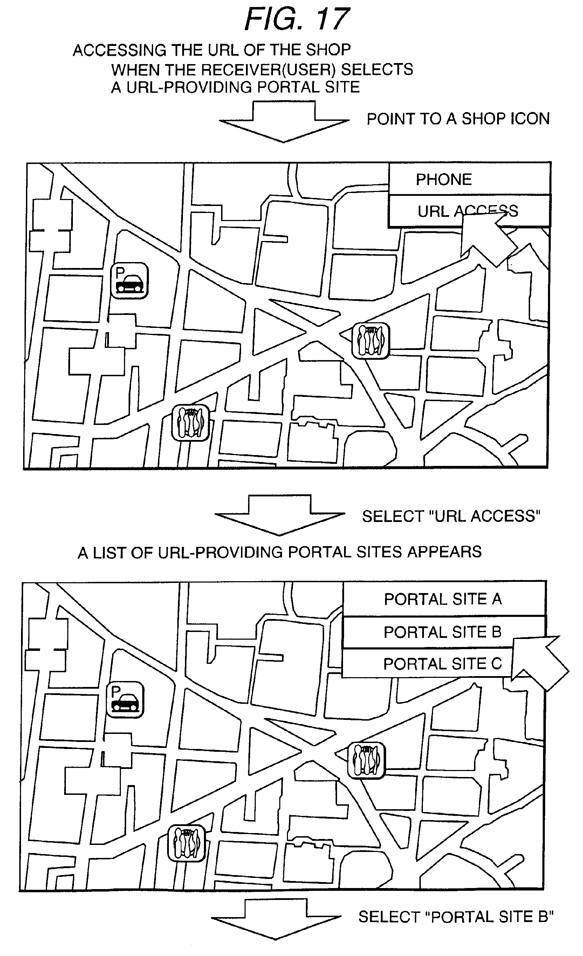

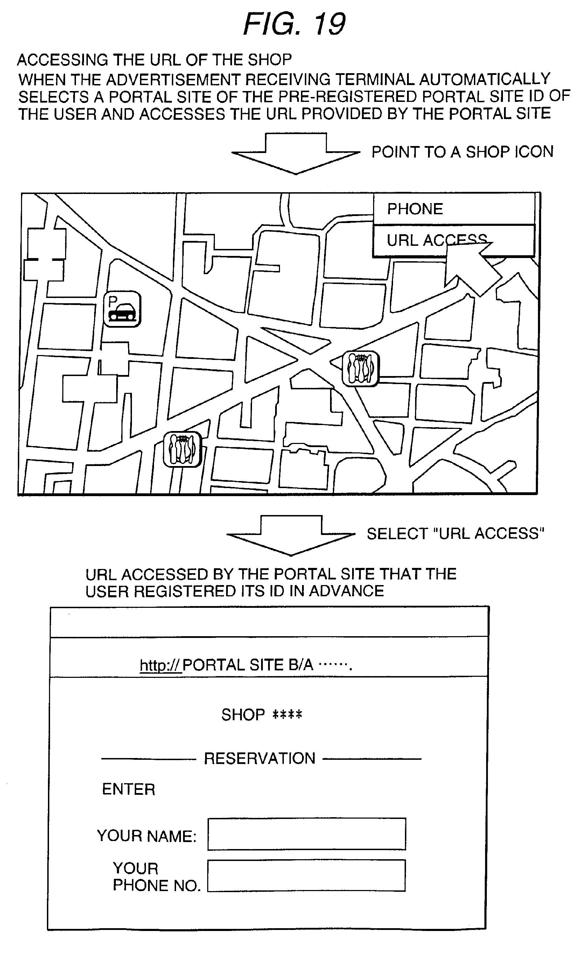

Further, the AD information displaying and executing block 11d also has a function to transmit the advertiser-associated URL and the portal site identifier sent from the portal site to the information-receiving terminal. (See Fig. 17 and Fig. 19.)

Next, will be explained components of the information receiving terminal 21.

### [Information receiving terminal 21]

The information receiving terminal 21 is connected to the advertiser's information transmitting terminal 41 via a mobile network 5. It is also connected, via the digital broadcasting network 6, to the AD delivering equipment 11 for the advertiser 3 that is connected to the server for an information provider 3 belonging to the advertiser's web site via the telecommunication network 7. The information-receiving terminal 21 is equipped with the image display block 21b that is connected to the server for the information provider 3 via the mobile network 5 and capable of displaying a local road map including the current position of the vehicle which has the information receiving terminal 21.

The information receiving terminal 21 comprises a receiving block 21a (for the AD delivering equipment, a request information input block 21c, and a transmitting block 21d (for the advertiser).

The information receiving terminal 21 pre-installs programs to make these blocks 21a, 21c, and 21d function as a whole information-receiving terminal 21.

In the embodiment of the present invention, the information-receiving terminal 21 has a function to access a site of a portal site identifier that the receiver registered in advance. Further, the terminal 21 has a function to get information about the advertiser, and make a purchase and a reservation in response to the advertisement.

### (1) Receiving block 21a (for the AD delivering equipment)

This block 21a (for the AD delivering equipment) of the information receiving terminal 21 has a function to receive, from the AD delivering equipment 11, AD information that the AD delivering equipment 11 created from advertiser's AD information, promotion information, and other AD information from the information transmitting terminal 41 and those from the server.

In the embodiment of the present invention, the receiving block 21a of the information receiving terminal 21 receives positional information of the AD receiving terminal which is the information receiving terminal 21 and its map from the AD information displaying and executing blocklld of the AD delivering equipment 11. (See Fig. 15.)

Further, the receiving block 21a has a function to receive AD information "About Shop ***" from the AD information displaying and executing block 11d. (See Fig. 16.)

Furthermore, the receiving block 21a has a function to receive an advertiser-associated URL and a portal site identifier from the AD information displaying and executing block 11d. (See Fig. 17 and Fig. 19.)

### (2) Image display block 21b

The image display block 21b has a function to receive AD information created by the AD delivering equipment 11 through the receiving block 21a of the information-receiving terminal 21 and display it on the screen of the block 21b.

### (3) Request information input block 21c

This block 21c enables the receiver to enter reservation, purchase, and other request information in response to the received AD information.

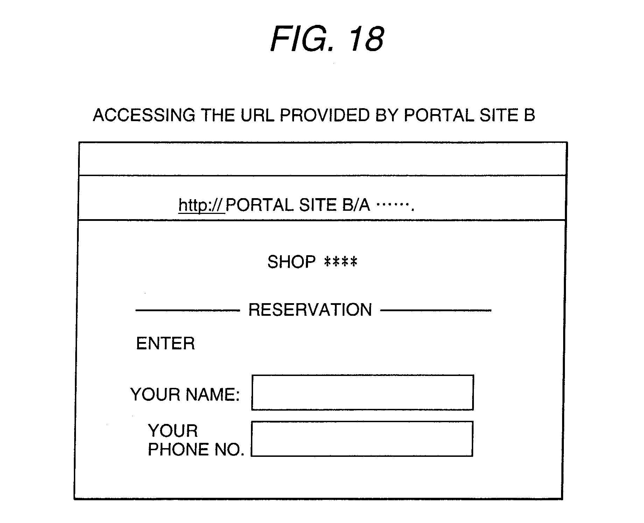

As shown in Fig. 18, the request information input block 21c in the embodiment of the present invention is so constructed that the receiver can enter his or her name and phone number on the "Shop *** Reservation" screen.

When the information receiving terminal 21 accesses the URL of a portal site that is automatically selected by a portal site identifier, the "Shop *** Reservation" screen appears and the receiver can enter his or her name and phone number on the screen. (See Fig. 19.)

(4) Transmitting block 21d (for the advertiser)

This block 21d has a function to transmit the entered request information to at least one of the information-transmitting terminal 41 of the advertiser 4 and the web site to which the advertiser 4 belongs.

This block 21d in the embodiment of the present invention can transmit the request information that was entered on the "Shop *** Reservation" screen to the portal site.

Next, will be explained components of the information provider server 31.

### [Information provider server 31]

The information provider server 31 is connected to the information transmitting terminal 41 of the advertiser 4 via the mobile network 5. The server 31 is also connected, via the telecommunication network 7, to the AD delivering equipment 11 of the AD deliverer 1 that is connected, via a digital broadcasting network 6 to the information receiving terminal 21 of a passenger 2 on vehicle that is equipped the image display block 21b capable of displaying a local road map of the area through which the vehicle runs. Further, the server 31 is for an information provider 3 that contains a web site of the advertiser 4 connected to the information receiving terminal 21 of the passenger 2 via the mobile network. The server 31 is constructed to contain a transmitting block 31a (for the AD deliverer 11) and a receiving block 31b (from a passenger 2 on vehicle).

The server 31 is a computer unit in the portal site and equipped with a database for web screens of the URL. The server 31 also contains programs that functions the transmitting block 31a (for the AD deliverer 11) and the receiving block 31b (from a passenger 2 on vehicle).

As already described, the portal site that is the information provider server 31 has a function to transmit an advertiser-associated URL and a portal site identifier to the advertising center, receive accounting information from the advertising center, and transmit portal site information (which is advertiser's web information) to the information receiver 2.

### (1) Transmitting block 31a (for the AD deliverer 11)

This transmitting block 31a has a function to transmit AD information, promotion information, and other AD information of the advertiser 1 to the AD delivering equipment 11 of the AD deliverer 1.

The transmitting block 31a also has a function to transmit AD information such as advertiser-associated URL and portal identifier to the information receiving block 11d (for the information provider) of the AD delivering equipment 11 although it is not illustrated in the embodiment of the present invention.

### (2) Receiving block 31b (from a passenger on vehicle)

The receiving block 31b has a function to receive, from the information-receiving terminal 21, reservation, purchase, and other request information (for the advertiser 4) that the information receiver created in response to the AD information. The AD delivering equipment 11 of the AD deliverer 1 creates the AD information from advertiser AD information from the information-transmitting terminal 41 and that from the server. The information is also received by the information receiving terminal 21 of the passenger 2 on vehicle.

The receiving block 31b of the passenger 2 on vehicle in the embodiment of the present invention receives reservation information such as "Your name:" and
"Your phone No:" (that the passenger made on the "Shop *** Reservation" screen) from the transmitting block 21d of the information receiving terminal 21. (See Fig. 18 and Fig. 19.)

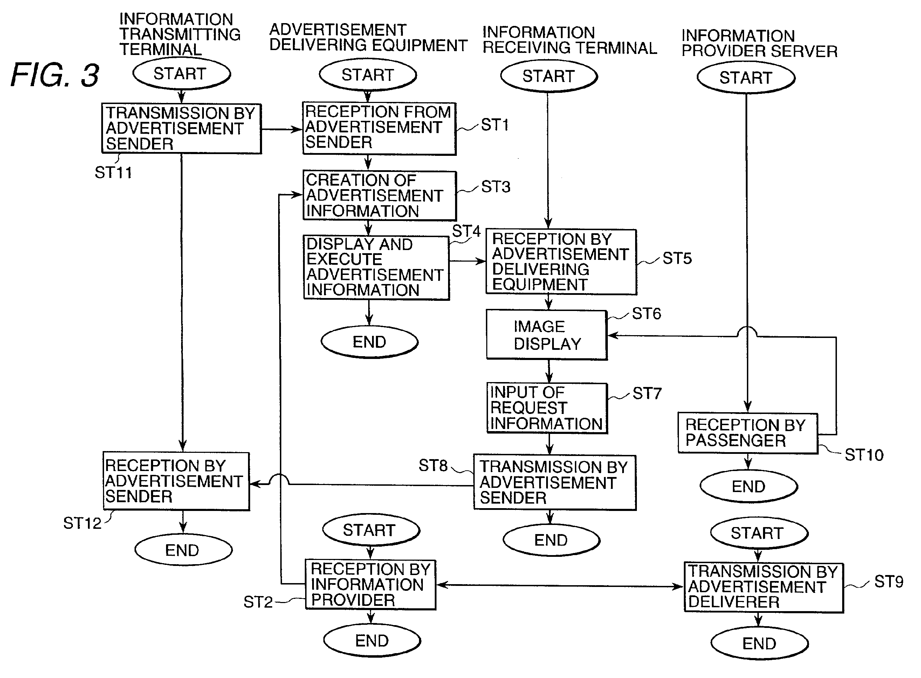

Below will be explained respective steps of the AD delivering method of the AD delivering system, the information receiving method of the information receiving terminal, and the information providing method of the server. Fig. 3 shows respective steps of the AD delivering system 11, the information receiving terminal 21, and the server 31.

### [AD delivering method]

This method uses the AD delivering equipment 11 that comprises the information receiving block 11a (for the advertiser), the information receiving block 11b (for the information provider), the AD information creating block 11c, and the AD information displaying and executing block 11d. This method comprises steps of receiving information from the advertiser, receiving information from the information provider, creating AD information, and displaying and executing AD information.

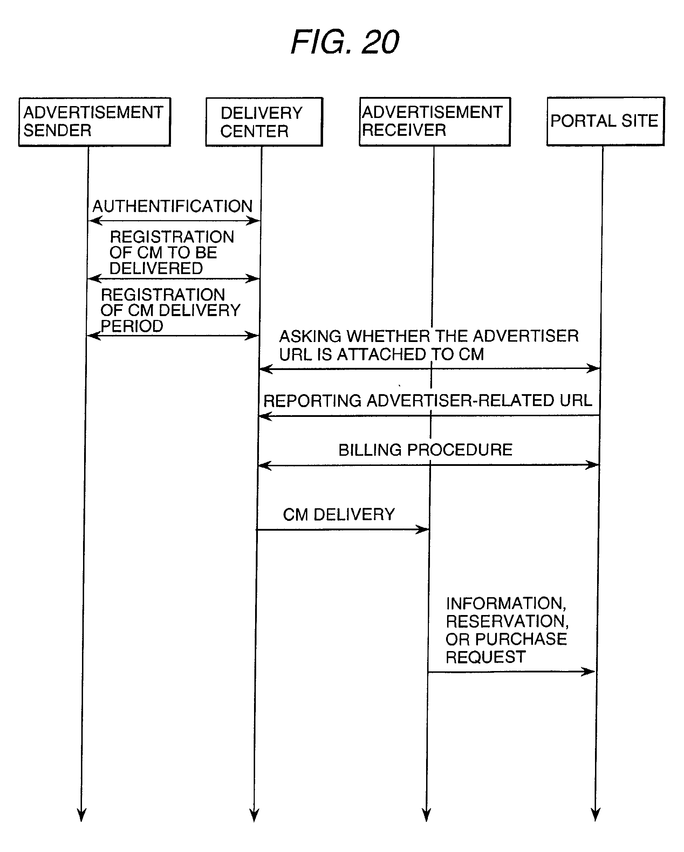

These steps will be explained in detail referring to Fig. 20, the advertiser 4 gets authentication from the advertising center which is an AD deliverer 1, and registers the content and delivery period of an advertisement to the advertising center.

The advertising center asks the portal site whether the advertiser-associated URL is attached to the AD, receives the advertiser-associated URL, arranges for accounting, and delivers AD to the AD receiver.

The AD receiver receives an advertisement (AD) from the advertising center and requests the portal site to send AD-related information, reservation information or purchase information.

The portal site receives an AD-related request, reservation request or purchase request from the AD receiver and sends a required information to the AD receiver.
Referring to Fig. 3, respective steps of the AD delivering method will be explained below. "ST" (e.g. ST1) is short for "Step."

### (1) Step 1

ST1 receives AD information, promotion information, and other AD information of the advertiser 4 from the information transmitting terminal 41.

ST1 in the embodiment of the present invention receives information about log-in authentication, registration of the content of an advertisement, and registration of an advertisement period from the advertiser 4.

### (2) Step 2

ST2 receives advertiser's AD information, promotion information, and other AD information from the information provider server 31.

ST2 in the embodiment of the present invention receives AD-associated information, an advertiser-associated URL and a portal identifier from the information provider 3.

### (3) Step 3

ST3 creates AD information to be transmitted to the information receiving terminal from AD information sent from the information transmitting terminal and AD information sent from the server.

ST3 in the embodiment of the present invention receives information entered by the advertiser (such as content of an advertisement) and creates AD information. This step (ST3) also adds AD-associated information, an advertiser-associated URL and a portal identifier (sent from the portal site) to the AD information.

### (4) Step 4

ST4 transmits AD information created by the AD information creating block 11c to the information receiving terminal 21. This step (ST4) visually displays the AD information on the image display block 21b of the information-receiving terminal 21.

### [Information receiving method]

As already explained, this method uses the information receiving terminal 21 of a passenger on vehicle to receive information and comprises a step of receiving information by a block 21a (for the AD delivering equipment), a step of entering request information, and a step of transmitting information by the transmitting block 21d (for the advertiser).

### (1) Step 5

ST5 receives AD information that the AD delivering equipment 11 created from advertiser's AD information, promotion information, and other AD information sent from the information transmitting terminal 41 and those sent from the server 31. This step (ST5) displays information (sent by the AD information displaying and executing step) on the image display block 21b.

ST5 in the embodiment of the present invention displays the positional information of the advertisement receiving terminal (or the information receiving terminal 21) and a local map on the image display block.

This step (ST5) also receives the advertisement "About Shop ***" from the AD information displaying and executing block 11d.

Further this step receives an advertiser-associated URL and a portal site identifier from the portal site via the AD information displaying and executing block 11d.

### (2) Step 6

ST6 receives AD information from the AD delivering equipment 11 via the receiving block 21a (for the AD delivering equipment) and displays it on the image display block.

### (3) Step 7

ST7 enables the information receiver to enter a reservation request, a purchase request or the other request information in response to the received AD information.

ST7 in the embodiment of the present invention makes an AD-associated information, reservation, or purchase request for the portal site.

### (4) Step 8

ST8 transmits the entered request information to at least one of the information-transmitting terminal 41 of the advertiser 4 and the web site of the advertiser 4.

ST8 transmits the AD-associated information, reservation request, or purchase request (that was entered at ST7) to the portal site.

### [Information providing method of the server]

As already explained, this step uses the server of the information provider 3 containing a web site of the advertiser 4 and comprises a step of transmitting to the AD deliverer and a step of receiving by a passenger on vehicle.

### (1) Step 9

ST9 transmits advertiser's AD information, promotion information, and other AD information to the AD delivering equipment 11 of the AD deliverer 1.

ST9 in the embodiment of the present invention transmits an advertiser-associated URL and a portal identifier to the receiving block 11b of the information provider.

### (2) Step 10

ST10 receives advertiser's reservation, purchase, and other request information that was created in response to AD information from the information-receiving terminal 21.

ST10 in the embodiment of the present invention causes the portal site to receive AD-associated information, reservation request, or purchase request from the transmitting block 21d (for the advertiser) of the information receiving terminal 21.

In accordance with the present invention, the advertising center that is an advertisement deliverer in the AD delivering system can deliver advertisement information of shops and facilities including their positional information to AD information receivers and can also deliver associated information such as detailed information and portal site information in addition to the advertisement information. The AD information receivers can receive advertisement information together with its detailed information that the server stores. An information provider such as a portal site can provide various kinds of information and expect increase in accesses by information receivers. The portal sites can measure up to receiver's expectations when fully enriched. Further, advertisers can utilize information providers such as portal sites and provides detailed information to AD information receivers without preparing their own systems. This can increase their investment efficiency.
As just described, the advertising center that delivers AD information can utilize AD information including positional information and detailed information more effectively. Consequently, the system can expect more information receivers and providers and expansion of the AD business.

## Claims

1. AD delivering equipment (11) connectable to an information transmitting terminal (41) which transmits information about an advertiser via a telecommunication network (5), to a server (31), and
to an information receiving terminal (21) having an image display unit (21b) which can display a local map containing a current vehicle position, the AD delivering equipment (11) comprising:
a first receiver (11a) for receiving AD information of an advertiser from an information transmitting terminal (41),
a second receiver (11b) for receiving AD information from a server (31),
an AD information creator block (11c) for creating AD information to be sent to the information receiving terminal (21) according to AD information from an information transmitting terminal (41) and AD information from a server (31), and
an AD information transmitter (11d) for transmitting AD information that was created by the AD information creator (11c) to the information receiving terminal (21) and for executing visual display of the AD information on the image display unit (21b) in the information receiving terminal (21).

2. An information-receiving terminal (21) which is connectable to AD delivering equipment (11) which in turn is connectable to an information transmitting terminal (41) which transmits information about an advertiser, and to a server (31) to which a web site of the advertiser belongs, via a telecommunication network (7),
the information receiving terminal (21) comprising an image display block (21b) which is connected to a server (31) via a radio communication network (5) and can display a local map including the current position of a vehicle, and a receiver (21a) which receives, from the AD delivering equipment (11), AD information which the AD delivering equipment created from advertiser's AD information from an information transmitting terminal (41) and those from the server (31).

3. The information receiving terminal (21) of Claim 2, further comprising
an input unit (21c) for entering reservation, purchase, and other request information in response to the received AD information and
a transmitter (21d) for transmitting the entered request information to at least one of the advertiser's information transmitting terminal (41) and the advertiser's web site.

4. A server (31) which is connectable, via a telecommunication network (7), to the AD delivering equipment (11), which in turn is connectable to an information transmitting terminal (41) which transmits information about an advertiser via a telecommunication network (5) and to an information receiving terminal (21) having an image display unit (21b) which can display a local map containing a current vehicle position,
the server (31) containing a web site of an advertiser connected to the information receiving terminal (41) via a mobile network, and the server (31) further comprising:
a transmitter (31a) for transmitting advertiser's AD information to the AD delivering equipment (11), and
a receiver (31b) which receives, from the information receiving terminal (21) on a vehicle, advertiser's reservation, purchase, and other request information that a passenger on the vehicle made in response to AD information which the AD delivering equipment (11) created from advertiser's AD information sent from an information transmitting terminal (41) and those from the server (31).

5. An AD delivering method of AD delivering equipment which is connected to an information transmitting terminal which transmits information about an advertiser via a telecommunication network, to a server, and to an information receiving terminal having an image display unit which can display a local map containing a current vehicle position via a mobile network, and the AD delivering equipment comprising a first receiver for receiving from an AD sender, a second receiver for receiving from a information provider, an AD information creator, and an AD information transmitter, the method comprising the steps of:
a step of causing the first receiver to receive advertiser's AD information from the information transmitting terminal,
a step of causing the second receiver to receive advertiser's AD information, promotion information and other information from the server,
a step of causing the AD information creator to create AD information to be sent to the information receiving terminal from AD information from the information transmitting terminal and AD information from the server, and
a step of causing the AD information transmitter to transmit the AD information created by the AD information creator to the information receiving terminal and to execute visual display of the AD information on an image display unit in the information receiving terminal.

6. An information receiving method of an information receiving terminal equipped with an image display unit capable of displaying a local road map including the current position of a vehicle which is connected to a server via a mobile network and to AD delivering equipment which in turn is connected to an advertiser's information receiving terminal by a telecommunication network and to a server which contains advertiser's web site via a mobile network, the method comprising:
a step causing a receiver in the information receiving terminal to receive, from the AD delivering equipment, AD information which the AD delivering equipment created from advertiser's AD information sent from the information receiving terminal and those sent from the server

7. The information receiving method of Claim 6, wherein the method further comprises
a step of causing the request information input block to input reservation, purchase, and other request information that a passenger on the vehicle made in response to the received AD information and
a step of causing the transmitter of the information receiving terminal to transmit the entered request information to at least one of the advertiser's information transmitting terminal and the advertiser's web site.

8. An information providing method of a server
which is connected, via a telecommunication network, to AD delivering equipment, which in turn is connected to an information transmitting terminal which transmits information about an advertiser via a telecommunication network and to an information receiving terminal having an image display unit which can display a local map containing a current vehicle position, and
which contains an web site of an advertiser connected to the information receiving terminal via a mobile network, the method comprises
a step of causing a transmitter of the server to transmit advertiser's AD information, promotion information and other information to the AD delivering equipment and
a step of causing a receiver of the server to receive, from the user's information receiving terminal, advertiser's reservation, purchase, and other request information that a passenger on the vehicle made in response to AD information which the AD delivering equipment created from advertiser's AD information sent from an information transmitting terminal and those from the server.
